# EUROPEAN PATENT APPLICATION

(11) **EP 4 510 697 A1**
(43) Date of publication of application: **19.02.2025**
(21) Application number: 23788562.9
(22) Date of filing: 11.04.2023
(51) Int. Cl.: H04W 28/26, H04W 74/08, H04W 72/02, H04W 72/20, H04W 72/04, H04W 92/18, H04W 72/54, H04W 72/56, H04W 4/40

(54) **METHOD AND APPARATUS FOR RESERVING RESOURCE FOR NR SIDELINK TRANSMISSION IN UNLICENSED BAND**

(30) Priority: 11.04.2022 KR 20220044661; 23.09.2022 KR 20220120767
(71) Applicant: LG Electronics Inc., Yeongdeungpo-gu Seoul 07336 (KR)
(72) Inventor: HWANG, Daesung, Seoul 06772 (KR); LEE, Seungmin, Seoul 06772 (KR)
(74) Representative: Mooser, Sebastian Thomas
(86) International application number: PCT/KR2023/004840
(87) International publication number: WO 2023/200213

(57) **Abstract**

Proposed is an operation method of a first device (100) in a wireless communication system. The method may comprise the steps of: determining the length of a channel sensing interval; selecting at least one resource on an unlicensed band; performing first channel sensing from a point of time that is before a start point of time of a first resource from among the at least one resource by as much as the channel sensing interval to the start point of time of the first resource; and performing SL transmission by using the first resource on the basis of a result of the first channel sensing being idle.

## Description

### TECHNICAL FIELD

This disclosure relates to a wireless communication system.

### BACKGROUND

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an entity having an infrastructure (or infra) established therein, and so on. The V2X may be spread into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR).

### DISCLOSURE

### TECHNICAL SOLUTION

According to an embodiment of the present disclosure, a method for performing, by a first device, wireless communication may be proposed. For example, the method may comprise: determining a length of a channel sensing interval; selecting at least one resource on an unlicensed band, wherein a time interval between the at least one resource may be longer than the length of the channel sensing interval; performing first channel sensing from a time point prior to a starting time point of a first resource among the at least one resource by the channel sensing interval, to the starting time point of the first resource; and performing a sidelink (SL) transmission using the first resource, based on a result of the first channel sensing being IDLE.

According to an embodiment of the present disclosure, a first device performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: determining a length of a channel sensing interval; selecting at least one resource on an unlicensed band, wherein a time interval between the at least one resource may be longer than the length of the channel sensing interval; performing first channel sensing from a time point prior to a starting time point of a first resource among the at least one resource by the channel sensing interval, to the starting time point of the first resource; and performing a sidelink (SL) transmission using the first resource, based on a result of the first channel sensing being IDLE.

According to an embodiment of the present disclosure, a device adapted to control a first user equipment (UE) may be proposed. For example, the device may comprise: at least one processor; and at least one memory operably connected to the at least one processor and storing instructions that, based on being executed by the at least one processor, cause the first UE to perform operations. For example, the operations may comprise: determining a length of a channel sensing interval; selecting at least one resource on an unlicensed band, wherein a time interval between the at least one resource may be longer than the length of the channel sensing interval; performing first channel sensing from a time point prior to a starting time point of a first resource among the at least one resource by the channel sensing interval, to the starting time point of the first resource; and performing a sidelink (SL) transmission using the first resource, based on a result of the first channel sensing being IDLE.

According to an embodiment of the present disclosure, a non-transitory computer-readable storage medium storing instructions may be proposed. For example, the instructions, based on being executed, may cause a first device to: determine a length of a channel sensing interval; select at least one resource on an unlicensed band, wherein a time interval between the at least one resource may be longer than the length of the channel sensing interval; perform first channel sensing from a time point prior to a starting time point of a first resource among the at least one resource by the channel sensing interval, to the starting time point of the first resource; and perform a sidelink (SL) transmission using the first resource, based on a result of the first channel sensing being IDLE.

According to an embodiment of the present disclosure, a method for performing, by a second device, wireless communication may be proposed. For example, the method may comprise: performing a sidelink (SL) reception based on a first resource on an unlicensed band, wherein SL data received through the SL reception may be transmitted based on a result of channel sensing being IDLE, wherein the channel sensing may be performed from a time point prior to a starting time point of the first resource among at least one resource on the unlicensed band by a channel sensing interval, to the starting time point of the first resource, and wherein a time interval between the at least one resource may be longer than a length of the channel sensing interval.

According to an embodiment of the present disclosure, a second device performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: performing a sidelink (SL) reception based on a first resource on an unlicensed band, wherein SL data received through the SL reception may be transmitted based on a result of channel sensing being IDLE, wherein the channel sensing may be performed from a time point prior to a starting time point of the first resource among at least one resource on the unlicensed band by a channel sensing interval, to the starting time point of the first resource, and wherein a time interval between the at least one resource may be longer than a length of the channel sensing interval.

### ADVANTAGEOUS EFFECTS

The user equipment (UE) may efficiently perform SL communication.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows a structure of an NR system, based on an embodiment of the present disclosure.
FIG. 4 shows a radio protocol architecture, based on an embodiment of the present disclosure.
FIG. 5 shows a structure of a radio frame of an NR, based on an embodiment of the present disclosure.
FIG. 6 shows a structure of a slot of an NR frame, based on an embodiment of the present disclosure.
FIG. 7 shows an example of a BWP, based on an embodiment of the present disclosure.
FIG. 8 shows a procedure of performing V2X or SL communication by a UE based on a transmission mode, based on an embodiment of the present disclosure.
FIG. 9 shows three cast types, based on an embodiment of the present disclosure.
FIG. 10 shows an example of a wireless communication system supporting an unlicensed band, based on an embodiment of the present disclosure.
FIG. 11 shows a method of occupying resources in an unlicensed band, based on an embodiment of the present disclosure.
FIG. 12 shows a case in which a plurality of LBT-SBs are included in an unlicensed band, based on an embodiment of the present disclosure.
FIG. 13 shows CAP operations performed by a base station to transmit a downlink signal through an unlicensed band, based on an embodiment of the present disclosure.
FIG. 14 shows type 1 CAP operations performed by a UE to transmit an uplink signal, based on an embodiment of the present disclosure.
FIG. 15 shows an example of a selected burst resource in an unlicensed band, according to one embodiment of the present disclosure.
FIG. 16 shows an example of a resource for SL communication in an unlicensed band, according to one embodiment of the present disclosure.
FIG. 17 shows a procedure for a first device to perform wireless communication, according to one embodiment of the present disclosure.
FIG. 18 shows a procedure for a second device to perform wireless communication, according to one embodiment of the present disclosure.
FIG. 19 shows a communication system 1, based on an embodiment of the present disclosure.
FIG. 20 shows wireless devices, based on an embodiment of the present disclosure.
FIG. 21 shows a signal process circuit for a transmission signal, based on an embodiment of the present disclosure.
FIG. 22 shows another example of a wireless device, based on an embodiment of the present disclosure.
FIG. 23 shows a hand-held device, based on an embodiment of the present disclosure.
FIG. 24 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with a machine learning capability. The vision of the 6G system can be in four aspects: intelligent connectivity, deep connectivity, holographic connectivity, and ubiquitous connectivity, and the 6G system may satisfy the requirements as shown in Table 1 below. In other words, Table 1 is an example of the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

6G system may have key factors such as eMBB(Enhanced mobile broadband), URLLC(Ultra-reliable low latency communications), mMTC(massive machine-type communication), AI integrated communication, Tactile internet, High throughput, High network capacity, High energy efficiency, Low backhaul and access network congestion, Enhanced data security.

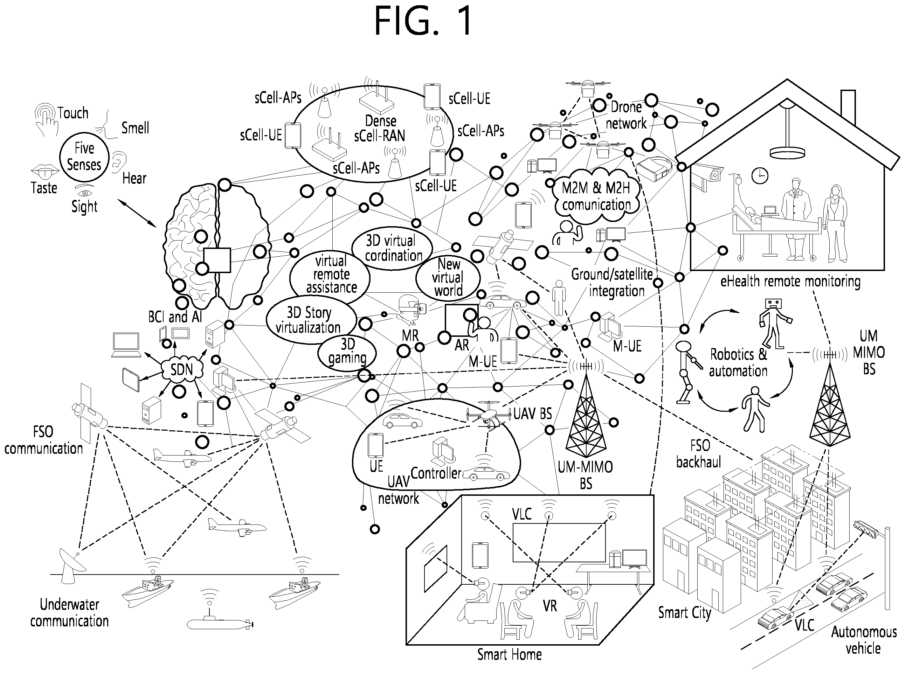

FIG. 1 shows a communication structure that can be provided in a 6G system, according to one embodiment of the present disclosure. The embodiment of FIG. 1 may be combined with various embodiments of the present disclosure.

6G systems are expected to have 50 times higher simultaneous radio connectivity than 5G radio systems. URLLC, a key feature of 5G, will become a more dominant technology in 6G communications by providing end-to-end delay of less than 1 ms. In 6G systems, volumetric spectral efficiency will be much better, as opposed to the area spectral efficiency often used today. 6G systems will be able to offer very long battery life and advanced battery technologies for energy harvesting, so mobile devices will not need to be recharged separately in 6G systems. In 6G, new network characteristics may be as follows.
- Satellites integrated network: To provide a global mobile population, 6G is expected to be integrated with satellite. The integration of terrestrial, satellite, and airborne networks into a single wireless communication system is important for 6G.
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer: 6G wireless networks will deliver power to charge batteries of devices such as smartphones and sensors. Therefore, wireless information and energy transfer (WIET) will be integrated.
- Ubiquitous super 3D connectivity: Super 3D connection will be generated from 6G ubiquity to access networks and core network functions on drones and very low Earth orbit satellites.

Given the above new network characteristics of 6G, some common requirements may be as follows
- small cell networks: The idea of small cell networks was introduced in cellular systems to improve received signal quality as a result of improved processing throughput, energy efficiency, and spectral efficiency. As a result, small cell networks are an essential characteristic for communication systems over 5G and beyond 5G (5GB). Therefore, 6G communication systems will also adopt the characteristics of small cell networks.
- Ultra-dense heterogeneous network: Ultra-dense heterogeneous networks will be another important characteristic of 6G communication systems. Multi-tier networks composed of heterogeneous networks will improve overall QoS and reduce costs.
- High-capacity backhaul: Backhaul connection is characterized by high-capacity backhaul networks to support large volumes of traffic. High-speed fiber optics and free-space optics (FSO) systems may be a possible solution to this problem.
- Radar technology integrated with mobile technology: High-precision localization (or location-based services) through communication is one of the features of 6G wireless communication systems. Therefore, radar systems will be integrated with 6G networks.
- Softwarization and virtualization: Softwareization and virtualization are two important features that are fundamental to the design process in a 5GB network to ensure flexibility, reconfigurability, and programmability. In addition, billions of devices may be shared on a shared physical infrastructure.

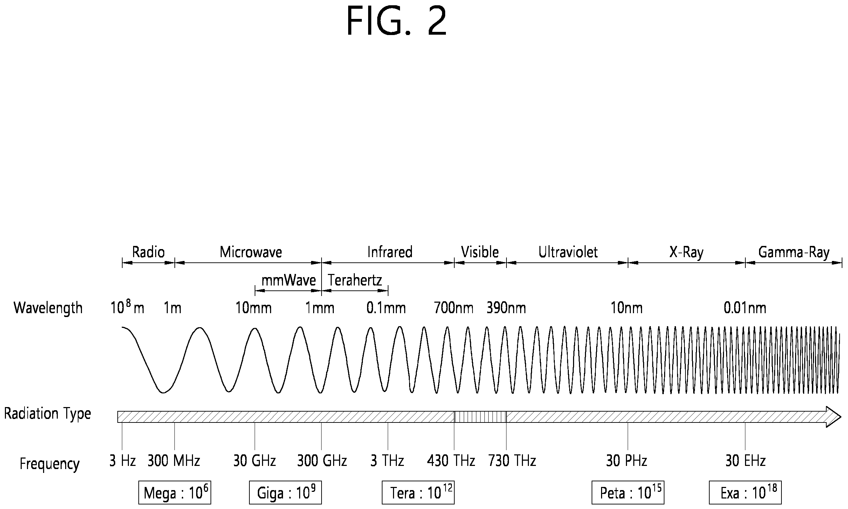

The following describes the core implementation technologies for 6G systems.
- Artificial Intelligence: The most important and new technology that will be introduced in the 6G system is AI. The 4G system did not involve AI. 5G systems will support partial or very limited AI. However, 6G systems will be fully AI-enabled for automation. Advances in machine learning will create more intelligent networks for real-time communication in 6G. The introduction of AI in telecommunications may streamline and improve real-time data transmission. AI may use numerous analytics to determine the way complex target operations are performed, which means AI can increase efficiency and reduce processing delays. Time-consuming tasks such as handover, network selection, and resource scheduling can be done instantly by using AI. AI may also play an important role in M2M, machine-to-human, and human-to-machine communications. In addition, AI may become a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Bmeaforming
- Optical wireless technology
- FSO Backhaul Network
- Non-Terrestrial Networks, NTN
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Autonomous Driving, Self-driving: For perfect autonomous driving, vehicles must communicate with each other to inform each other of dangerous situations, or with infrastructure such as parking lots and traffic lights to check information such as the location of parking information and signal change times. Vehicle to Everything (V2X), a key element in building an autonomous driving infrastructure, is a technology that allows vehicles to communicate and share information with various elements on the road, in order to perform autonomous driving, such as vehicle-to-vehicle (V2V) wireless communication and vehicle-to-infrastructure (V2I) wireless communication. In order to maximize the performance of autonomous driving and ensure high safety, fast transmission speeds and low latency technologies are essential. In addition, in the future, autonomous driving will go beyond delivering warnings or guidance messages to a driver to actively intervene in vehicle operation and directly control the vehicle in dangerous situations, so the amount of information that needs to be transmitted and received will be vast, and 6G is expected to maximize autonomous driving with faster transmission speeds and lower latency than 5G.

For the sake of clarity, the description focuses on 5G NR, but the technical ideas of one embodiment of the present disclosure are not limited thereto. Various embodiments of the present disclosure may also be applicable to 6G communication systems.

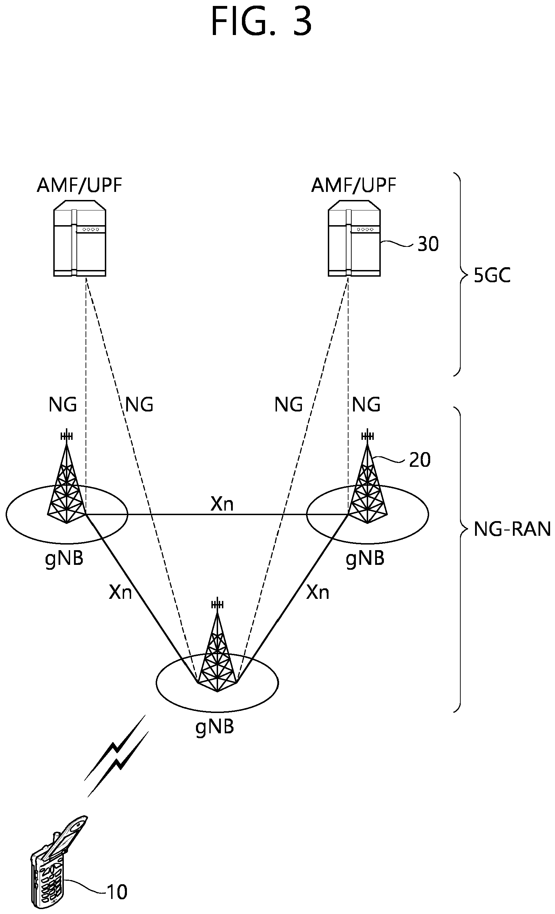

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

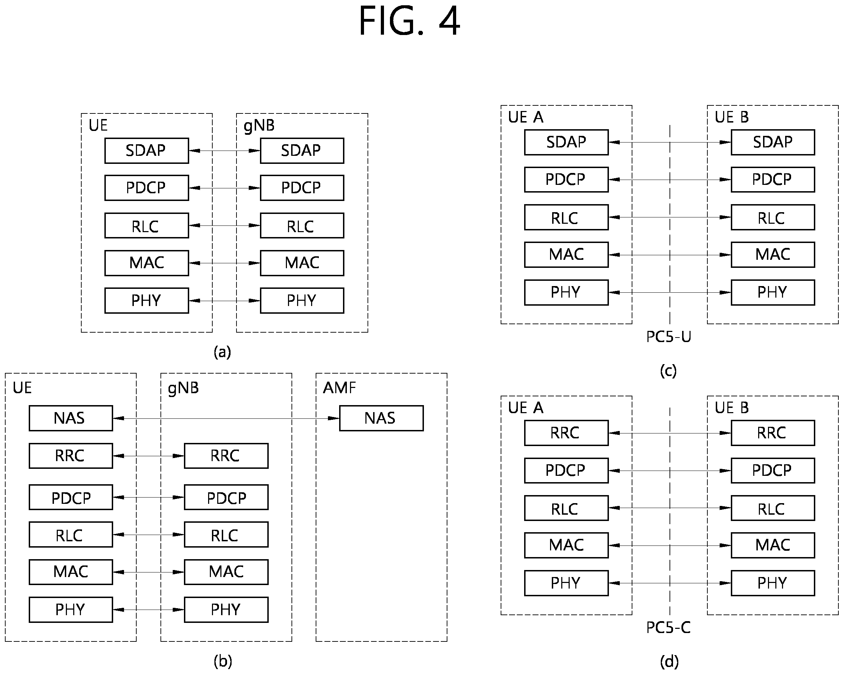

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

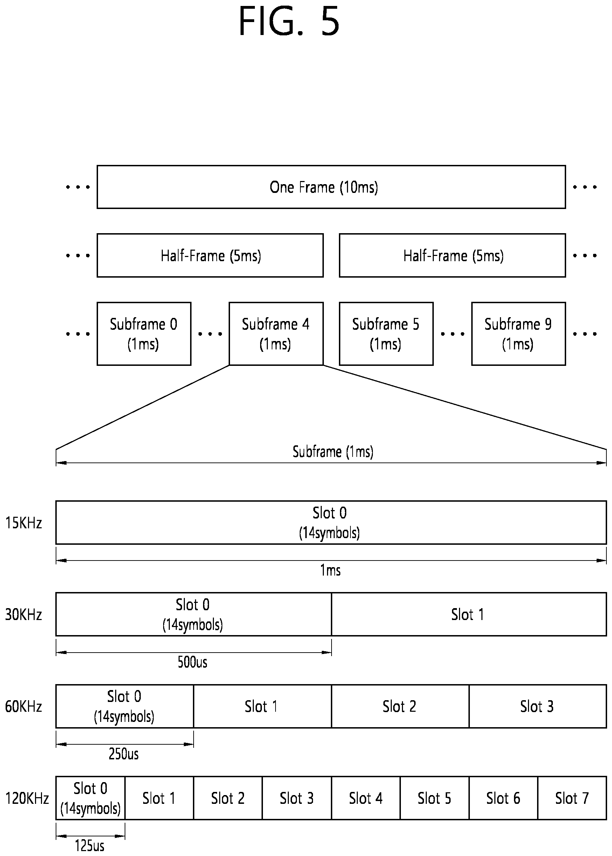

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), number of slots per frame (N^{frame,u}ₛₗₒₜ), and number of slots per subframe (N^{subframe,u}ₛₗₒₜ), depending on the SCS configuration (u), when Normal CP or Extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

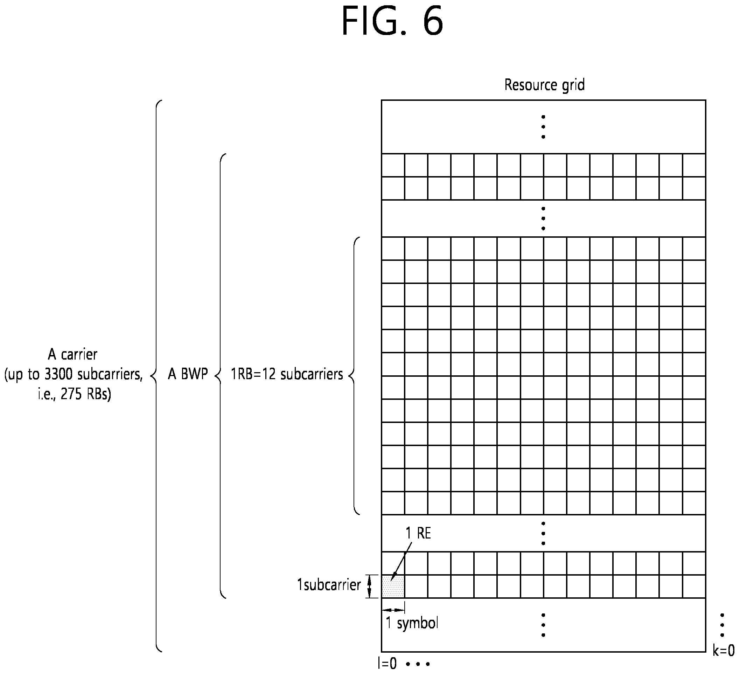

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on).

A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

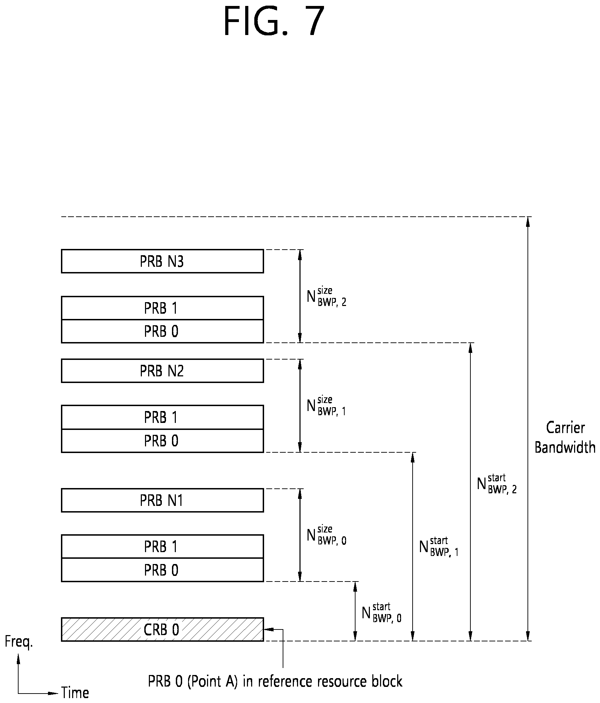

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

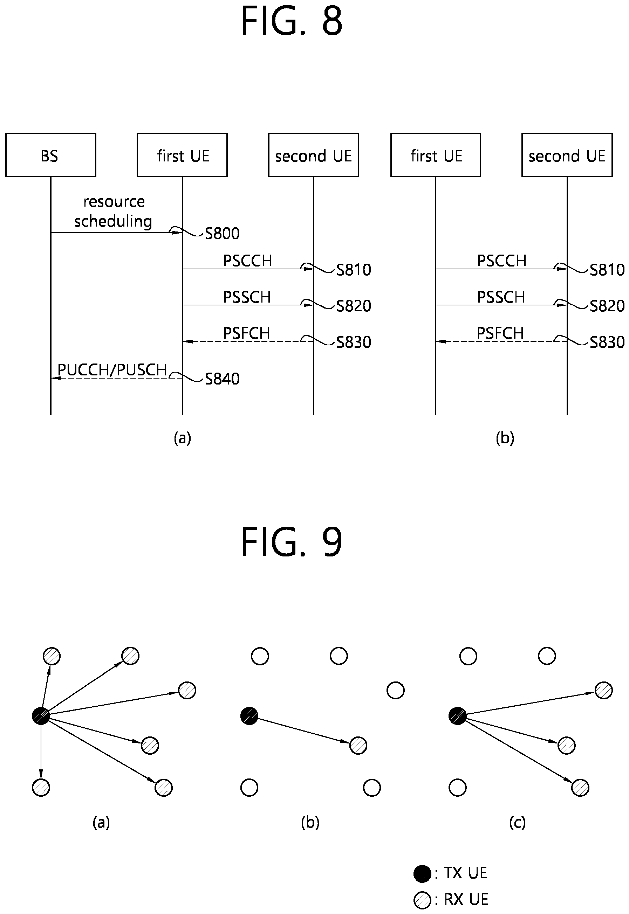

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

FIG. 9 shows three cast types, in accordance with an embodiment of the present disclosure. The embodiment of FIG. 9 may be combined with various embodiments of the present disclosure. Specifically, FIG. 9(a) shows broadcast-type SL communication, FIG. 9(b) shows unicast type-SL communication, and FIG. 9(c) shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Meanwhile, in the conventional unlicensed spectrum (NR-U), a communication method between a UE and a base station is supported in an unlicensed band. In addition, a mechanism for supporting communication in an unlicensed band between sidelink UEs is planned to be supported in Rel-18.

In the present disclosure, a channel may refer to a set of frequency domain resources in which Listen-Before-Talk (LBT) is performed. In NR-U, the channel may refer to an LBT bandwidth with 20 MHz and may have the same meaning as an RB set. For example, the RB set may be defined in section 7 of 3GPP TS 38.214 V17.0.0.

In the present disclosure, channel occupancy (CO) may refer to time/frequency domain resources obtained by the base station or the UE after LBT success.

In the present disclosure, channel occupancy time (COT) may refer to time domain resources obtained by the base station or the UE after LBT success. It may be shared between the base station (or the UE) and the UE (or the base station) that obtained the CO, and this may be referred to as COT sharing. Depending on the initiating device, this may be referred to as gNB-initiated COT or UE-initiated COT.

Hereinafter, a wireless communication system supporting an unlicensed band/shared spectrum will be described.

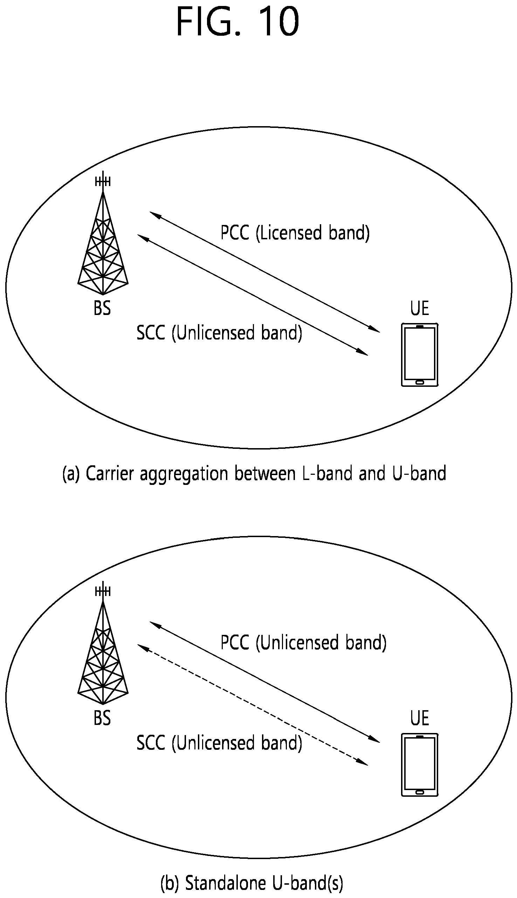

FIG. 10 shows an example of a wireless communication system supporting an unlicensed band, based on an embodiment of the present disclosure. For example, FIG. 10 may include an unlicensed spectrum (NR-U) wireless communication system. The embodiment of FIG. 10 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 10, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 10. In other words, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 10, the base station may be replaced with the UE. In this case, for example, PSCCH transmission, PSSCH transmission, PSFCH transmission, S-SSB transmission, etc. may be supported on a UCell.

Unless otherwise noted, the definitions below are applicable to the following terminologies used in the present disclosure.
- Channel: a carrier or a part of a carrier composed of a contiguous set of RBs in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of Tₛₗ = 9 us. The base station or the UE senses a channel during a sensing slot duration. If power detected for at least 4 us within the sensing slot duration is less than an energy detection threshold Xₜₕᵣₑₛₕ, the sensing slot duration Tₛₗ is considered to be idle. Otherwise, the sensing slot duration Tₛₗ = 9 us is considered to be busy. CAP may also be referred to as listen before talk (LBT).
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

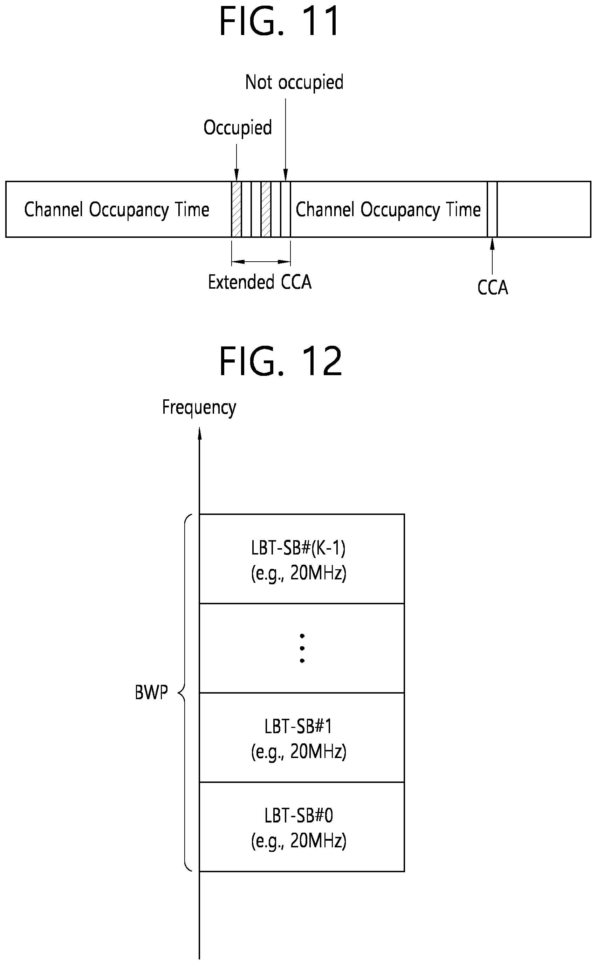

FIG. 11 shows a method of occupying resources in an unlicensed band, based on an embodiment of the present disclosure. The embodiment of FIG. 11 may be combined with various embodiments of the present disclosure.

Referring to FIG. 11, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is the that clear channel assessment (CCA) is confirmed. If a CCA threshold (e.g., X_{Thresh}) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT.

Table 5 shows an example of the channel access procedure (CAP) supported in NR-U.

**[Table 5]**

| | Type | Explanation |
|---|---|---|
| DL | Type 1 CAP | CAP with random back-off |
| | | - time duration spanned by the sensing slots that are sensed to be idle before a downlink transmission(s) is random |
| | Type 2 CAP | CAP without random back-off |
| | | - time duration spanned by sensing slots that are sensed to be idle before a downlink transmission(s) is deterministic |
| | - Type 2A, 2B, 2C | |
| UL or SL | Type 1 CAP | CAP with random back-off |
| | | - time duration spanned by the sensing slots that are sensed to be idle before an uplink or sidelink transmission(s) is random |
| | Type 2 CAP | CAP without random back-off |
| | | - time duration spanned by sensing slots that are sensed to be idle before an uplink or sidelink transmission(s) is deterministic |
| | - Type 2A, 2B, 2C | |

Referring to Table 5, the LBT type or CAP for DL/UL/SL transmission may be defined. However, Table 5 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 12 shows a case in which a plurality of LBT-SBs are included in an unlicensed band, based on an embodiment of the present disclosure. The embodiment of FIG. 12 may be combined with various embodiments of the present disclosure.

Referring to FIG. 12, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB #(K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:
- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 9 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

**[Table 6]**

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

### (1) Type 1 downlink (DL) CAP Method

In the type 1 DL CAP, the length of a time duration spanned by sensing slots sensed to be idle before transmission(s) may be random. The type 1 DL CAP may be applied to the following transmissions:
- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

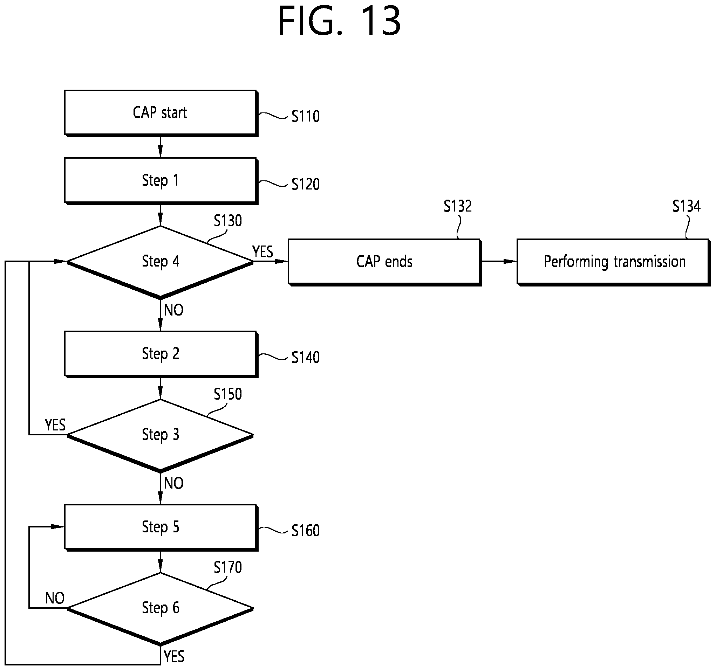

FIG. 13 shows CAP operations performed by a base station to transmit a downlink signal through an unlicensed band, based on an embodiment of the present disclosure. The embodiment of FIG. 13 may be combined with various embodiments of the present disclosure.

Referring to FIG. 13, the base station may sense whether a channel is idle for sensing slot durations of a defer duration T_{d}. Then, if a counter N is zero, the base station may perform transmission (S134). In this case, the base station may adjust the counter N by sensing the channel for additional sensing slot duration(s) according to the following steps:
Step 1) (S120) The base station sets N to Nᵢₙᵢₜ (N= Nᵢₙᵢₜ), where Nᵢₙᵢₜ is a random number uniformly distributed between 0 and CWₚ. Then, step 4 proceeds.
Step 2) (S140) If N>0 and the base station determines to decrease the counter, the base station sets N to N-1 (N=N-1).
Step 3) (S150) The base station senses the channel for the additional sensing slot duration. If the additional sensing slot duration is idle (Y), step 4 proceeds. Otherwise (N), step 5 proceeds.
Step 4) (S130) If N=0 (Y), the base station terminates the CAP (S132). Otherwise (N), step 2 proceeds.
Step 5) (S160) The base station senses the channel until either a busy sensing slot is detected within an additional defer duration T_{d} or all the slots of the additional defer duration T_{d} are detected to be idle.
Step 6) (S170) If the channel is sensed to be idle for all the slot durations of the additional defer duration T_{d} (Y), step 4 proceeds. Otherwise (N), step 5 proceeds.

Table 7 shows that mₚ, a minimum contention window (CW), a maximum CW, a maximum channel occupancy time (MCOT), and an allowed CW size, which are applied to the CAP, vary depending on channel access priority classes.

**[Table 7]**

| Channel Access Priority Class (p) | mₚ | CWₘᵢₙ, ₚ | CW_{max ,p} | T_{mcot,p} | allowed CWₚ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 7, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration T_{d} is configured in the following order: duration T_{f} (16 us) + mₚ consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on HARQ-ACK feedback (e.g., the ratio of ACK or NACK) for a previous DL burst (e.g., PDSCH) (CW size update). For example, CWₚ may be initialized to CW_{min,p} based on the HARQ-ACK feedback for the previous DL burst. Alternatively, CWₚ may be increased to the next higher allowed value or maintained as it is.

### (2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration T_{short_dl} = 25 us. Herein, T_{short_dl} includes the duration T_{f} (=16 us) and one sensing slot duration immediately after the duration T_{f}, where the duration T_{f} includes a sensing slot at the beginning thereof.
- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for T_{f} = 16 us. T_{f} includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

### (1) Type 1 uplink (UL) CAP Method

In the type 1 UL CAP, the length of a time duration spanned by sensing slots sensed to be idle before transmission(s) is random. The type 1 UL CAP may be applied to the following transmissions.
- PUSCH/SRS transmission(s) scheduled and/or configured by the base station
- PUCCH transmission(s) scheduled and/or configured by the base station
- Transmission(s) related to a random access procedure (RAP)

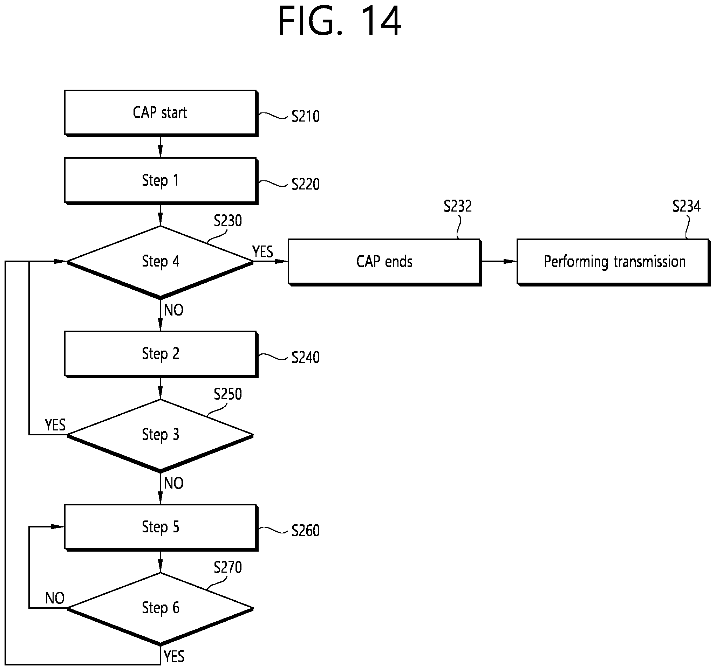

FIG. 14 shows type 1 CAP operations performed by a UE to transmit an uplink signal, based on an embodiment of the present disclosure. The embodiment of FIG. 14 may be combined with various embodiments of the present disclosure.

Referring to FIG. 14, the UE may sense whether a channel is idle for sensing slot durations of a defer duration T_{d}. Then, if a counter N is zero, the UE may perform transmission (S234). In this case, the UE may adjust the counter N by sensing the channel for additional sensing slot duration(s) according to the following steps:
Step 1) (S220) The UE sets N to Nᵢₙᵢₜ (N = Nᵢₙᵢₜ), where Nᵢₙᵢₜ is a random number uniformly distributed between 0 and CWₚ. Then, step 4 proceeds.
Step 2) (S240) If N>0 and the UE determines to decrease the counter, the UE sets N to N-1 (N = N-1).
Step 3) (S250) The UE senses the channel for the additional sensing slot duration. If the additional sensing slot duration is idle (Y), step 4 proceeds. Otherwise (N), step 5 proceeds.
Step 4) (S230) If N=0 (Y), the UE terminates the CAP (S232). Otherwise (N), step 2 proceeds.
Step 5) (S260) The UE senses the channel until either a busy sensing slot is detected within an additional defer duration T_{d} or all the slots of the additional defer duration T_{d} are detected to be idle.
Step 6) (S270) If the channel is sensed to be idle for all the slot durations of the additional defer duration T_{d} (Y), step 4 proceeds. Otherwise (N), step 5 proceeds.

Table 8 shows that mₚ, a minimum CW, a maximum CW, a maximum channel occupancy time (MCOT), and an allowed CW size, which are applied to the CAP, vary depending on channel access priority classes.

**[Table 8]**

| Channel Access Priority Class (p) | mₚ | CW_{min, p} | CW_{max, p} | T_{ulmcot,p} | allowed CWₚ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 8, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration T_{d} is configured in the following order: duration T_{f} (16 us) + mₚ consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on an explicit/implicit reception response for a previous UL burst (e.g., PUSCH) (CW size update). For example, CWₚ may be initialized to CW_{min,p} based on the explicit/implicit reception response for the previous UL burst. Alternatively, CWₚ may be increased to the next higher allowed value or maintained as it is.

### (2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration T_{short_dl} = 25 us. Herein, T_{short_dl} includes the duration T_{f} (=16 us) and one sensing slot duration immediately after the duration T_{f}. In the type 2A UL CAP, T_{f} includes a sensing slot at the beginning thereof. In the type 2B UL CAP, the UE may perform transmission immediately after the channel is sensed to be idle for the sensing duration T_{f} = 16 us. In the type 2B UL CAP, T_{f} includes a sensing slot within 9 us from the end of the duration. In the type 2C UL CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CACP (e.g., minimum contention window size, maximum contention window size, mₚ, etc.). For example, the UE may select a backoff counter (BC) after selecting a random value between the minimum CW and the maximum CW mapped to the CAPC. In this case, for example, the BC may be a positive integer less than or equal to the random value. The UE sensing a channel decreases the BC by 1 if the channel is idle. If the BC becomes zero and the UE detects that the channel is idle for the time T_{d} (T_{d} = T_{f} + mₚ * Tₛₗ), the UE may attempt to transmit data by occupying the channel. For example, Tₛₗ (= 9 usec) is a basic sensing unit or sensing slots, and may include a measurement duration for at least 4 usec. For example, the front 9 usec of T_{f} (= 16 usec) may be configured to be Tₛₗ.

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 25 usec gap. The type 2A may be used to initiate transmission of SSB and non-unicast DL information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). That is, the operation in which the UE checks whether the channel is idle or busy may be referred to as Clear Channel Assessment (CCA), and the UE may check whether the channel is idle or busy for the CCA duration.

Meanwhile, in a future system, a UE may perform a sidelink transmission and/or reception operation in an unlicensed band. For operations in an unlicensed band, depending on band-specific regulations or requirements, a UE's transmission may be preceded by a channel sensing operation (e.g., energy detection/measurement) for the channel to be used, a UE may perform a transmission in the unlicensed band only if, as a result of the channel sensing, the channel or RB set to be used is determined to be IDLE (e.g., if the measured energy is less than or equal to or greater than a certain threshold value), and, if, according to a result of the channel sensing, the channel or RB set to be used is determined to be BUSY (e.g., if the measured energy is greater than or equal to or greater than a certain threshold value), the UE may cancel all or part of the transmission in the unlicensed band.

Meanwhile, in operation in an unlicensed band, a UE may omit or simplify the channel sensing operation (i.e., make the channel sensing interval relatively small) within a certain time interval after a transmission for a certain time period, or conversely, after a certain time interval after the transmission, the UE may decide whether to transmit or not after performing the usual channel sensing operation.

On the other hand, in a transmission in an unlicensed band, depending on regulations or requirements, the size and/or power spectral density (PSD) of the time interval and/or frequency occupied region of the signal/channel transmitted by the UE may be greater than or equal to a certain level, respectively.

On the other hand, in an unlicensed band, in order to simplify the channel sensing, it may be informed through the channel occupancy time (COT) duration information that it occupies the channel obtained through the initial general channel sensing for a certain period of time, and the maximum value of the length of the COT duration may be set differently according to the priority value of a service or a data packet.

On the one hand, a base station may share a COT duration that it has secured through channel sensing in the form of a DCI transmission, and a UE may perform a specific (indicated) channel sensing type and/or CP extension within the COT duration based on the DCI information received from the base station. On the other hand, a UE may share a COT duration that it has secured through channel sensing to a base station that is the destination of the UE's UL transmission, and the relevant information may be provided through the UL via CG-UCI. In the above situation, the base station may perform simplified channel sensing within the COT duration shared by the UE.

In the case of SL communication, there are situations where a UE is indicated by a base station to use resources for SL transmission through DCI or RRC signaling, such as Mode 1 RA operation, and there are situations where a UE performs SL transmission and reception through sensing operation between UEs without the assistance of a base station, such as Mode 2 RA operation.

In the case of DL transmissions or UL transmissions in an unlicensed band, transmissions over consecutive slots or resources are supported to alleviate the problem that the time to the next reserved resource or to the next transmission again may be long when the channel sensing result for the transmission resource is busy, and/or to reduce the overhead caused by channel sensing between transmissions. The consecutive transmissions may be for the same TB or data, or they may be for different TBs or data.

On the other hand, a time interval between scheduled resources during SL transmission may be limited to be greater than or equal to the HARQ round trip time (RTT, it is determined as a combination of PSCCH/PSSCH RX processing time and/or PSFCH TX/RX processing time and/or PSCCH/PSSCH TX processing time) if a PSFCH resource is configured in the resource pool.

For example, SL transmission resources may be repeated N times for consecutive slots. For example, during the N repetitions, the frequency domain resources of the SL transmission resources may remain the same. For example, during the N repetitions, the frequency domain resources of the SL transmission resources may remain the same for an RB set (group), but an RB or interlace within the RB set may be different.

For example, the frequency domain resource change may be determined based on an SL priority value and/or a repetition N value and/or a priority class and/or a slot index and/or a source ID and/or a destination ID and/or a CRC value of the PSCCH and/or the like. For example, the frequency domain resource change may be indicated differently via SCIs transmitted in each slot.

For example, a UE may indicate consecutive resources via a plurality of TRIVs and/or a plurality of FRIV fields via SCI. For example, a TRIV may indicate a starting slot of a consecutive SL burst resource for a single or plurality of reserved resources, and/or a first FRIV may indicate a frequency resource for a first SL burst and a second FRIV may indicate a frequency resource for a second SL burst. For example, the TRIV may indicate a single or plurality of reserved burst resource (starting and/or end) slot locations, including the slot in which the PSCCH and/or PSSCH including the TRIV is transmitted. For example, reference slots for the plurality of reserved resource slot locations indicated in the TRIV may all be the same. For example, the same reference slots may be the slots to which the PSCCH and/or PSSCH including the TRIV was transmitted. For example, the reference slots for the plurality of reserved resource slot locations indicated in the TRIV may be different for each reserved resource.

For example, the reference slot for the first reserved resource slot indication may be the slot in which the PSCCH and/or PSSCH including the TRIV was transmitted and/or the end time point of the SL burst for the PSCCH and/or PSSCH including the TRIV.

For example, the reference slot for the second reserved resource slot indication may be the end time point of the SL burst for PSCCH and/or PSSCH including TRIV and/or the starting or end time point of the first reserved burst resource.

For example, the number of slots comprising an SL burst may be the same for both the reserved resource indicated by a TRIV and the PSCCH/PSSCH indicating the TRIV. For example, the number of slots comprising the SL burst may be (pre-) configured and/or may be indicated by PSCCH and/or PSSCH. For example, the number of slots comprising an SL burst may be different for the reserved resource indicated by TRIV and for the PSCCH/PSSCH indicating TRIV. For example, the number of slots comprising the SL burst may be separately (pre-)configured for each reserved resource and/or for the PSCCH/PSSCH indicating TRIV, and/or may be indicated via SCI.

For example, for the slot location for each FRIV in the above, the SL burst may consist of consecutive slots and the starting subchannel index indicated by the FRIV may begin to be applied from the first slot of the SL burst and may be applied sequentially to the next slot.

For example, a TRIV may indicate a starting slot of a consecutive SL burst resource for a single or plurality of reserved resources, and/or the first starting subchannel index of the first FRIV and the second FRIV may indicate a frequency resource of the first SL burst, and the second starting subchannel index of the first FRIV and the second FRIV may indicate a frequency resource of the second SL burst.

For example, the reference slots for the plurality of TRIVs may all be the same. For example, the reference slot for the plurality of TRIVs may be the slot in which a PSCCH and/or PSSCH including a TRIV was transmitted. For example, the reference slots for the plurality of TRIVs may be different per TRIV group or per TRIV. For example, the reference slot of a first TRIV may be the slot in which a PSCCH and/or PSSCH including the TRIV was transmitted. For example, the reference slot of a second TRIV may be the end time point of the last SL resource and/or SL burst resource indicated by the first TRIV. For example, the reference slot of a second TRIV may be the end time point of the last SL resource and/or SL burst resource that can be indicated by the first TRIV. For example, the reference slot of a second TRIV may be indicated separately via PSCCH and/or PSSCH.

For example, the number of slots comprising an SL burst may be the same for all of the plurality of TRIVs. For example, the number of slots comprising the SL burst may be (pre)configured and/or indicated by SCI. For example, the number of slots comprising the SL burst may be different for the plurality of TRIVs. For example, the number of slots comprising the SL burst may be (pre)configured and/or indicated by SCI per TRIV. For example, for each SL burst, the starting subchannel and/or the number of subchannels indicated by the first FRIV may be applied for the starting slot of an SL burst, followed by the starting subchannel and/or the number of subchannels indicated by the first FRIV for the immediately following slot.

For example, the N value may be (pre-)configured per resource pool and/or per SL priority value and/or per priority class and/or per whether SL HARQ-ACK feedback is enabled or not. For example, the N value may be a value indicated via first SCI and/or second SCI. For example, the N value may be differently/independently indicated and/or configured and applied per reserved resource indicated via SCI. The N value may be commonly applied to all reserved resources indicated via SCI.

For example, all of the reserved resources may be limited to being for the same TB. For example, all of the reserved resources may be for different TBs, and a HARQ process number and/or NDI and/or RV and/or source ID and/or destination ID and/or whether SL HARQ-ACK is enabled and/or SL HARQ-ACK feedback option and/or cast type and/or SL priority may be indicated per each TB or group of TBs via second SCI. For example, all of the above reserved resources may be for different TBs, and the HARQ process number and/or NDI and/or RV and/or source ID and/or DESTINATION ID and/or whether SL HARQ-ACK is enabled and/or SL HARQ-ACK feedback option and/or cast type and/or SL priority may be indicated per each TB or group of TBs via second SCI in each slot.

For example, the value of N may be determined by the UE implementation, but when indicated by a UE in SCI, it may indicate how many PSCCH/PSSCH transmission resources are present in subsequent consecutive slots from the currently transmitted slot. For example, the value of N is determined by the UE implementation, but when indicated by a UE in SCI, it may indicate whether PSCCH/PSSCH transmission resources are present in the next consecutive slot from the currently transmitted slot.

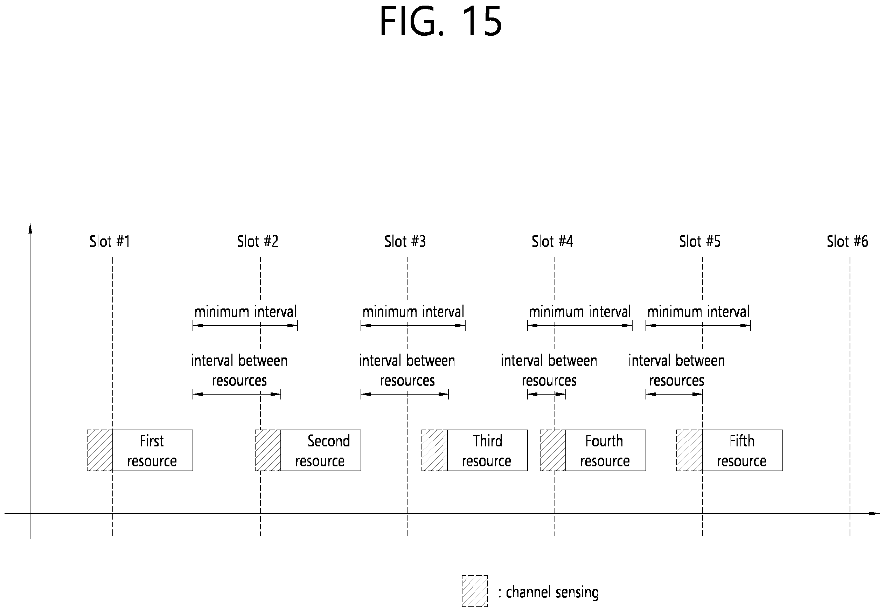

FIG. 15 shows an example of a selected burst resource in an unlicensed band, according to one embodiment of the present disclosure. The embodiment of FIG. 15 may be combined with various embodiments of the present disclosure.

Referring to FIG. 15, a first resource to a fifth resource is shown. For example, the first resource to the fifth resource may be a burst resource selected according to embodiments of the present disclosure, i.e., the first resource to the fifth resource may be selected such that the interval between the resources is less than a minimum interval related to a burst resource.

For example, the first resource to the fifth resource may be selected from consecutive slots. The first resource to the fifth resource may be selected from consecutive slots, but the locations within each slot may be different.

For example, before performing transmissions based on the first resource to the fifth resource, a channel sensing has to be performed until the start of each of the first resource to the fifth resource, as long as the channel sensing interval. For example, only if the results of the channel sensing related to each of the resources are idle, the transmission on that resource may be performed.

For example, in this embodiment, it is assumed that the result of the channel sensing related to the third resource is busy. In this case, a transmitting UE may perform resource reselection for the resources (third to fifth resources) after the channel sensing whose results are busy, including the third resource. In this case, the resource reselection may be performed for all of the third to fifth resources. The inter-resource interval between the third resource and the fifth resource after the resource reselection may be selected to be less than a minimum interval related to the burst resource.

A UE that receives SCI in an embodiment of the present disclosure, for all or part of a group of reserved resources derived from the reserved resources indicated in the SCI and/or the number of repetitions for the reserved resources, may exclude candidate resources that overlap with the reserved resources (based on the RSRP measurement value) from the set of available candidate resources. For example, when a UE selects available resources, if the amount of available resource candidates before and/or after boosting for an RSRP threshold is insufficient (e.g., if the number of available resource candidates or the ratio within the resource selection window is below or equal to a (pre-)configured threshold value), repeated resources or resources that overlap with repeated resources may again be included in the set of available resource candidates.

In embodiments of the present disclosure, the procedure for a transmitting UE to obtain PSCCH/PSSCH transmission resources for consecutive slots may be a case where all consecutive resources belong to the set of available resources in the resource (re)selection procedure based on an RSRP measurement value. In an embodiment of the present disclosure, the procedure for a transmitting UE to obtain PSCCH/PSSCH transmission resources for consecutive slots may be a case where a part of the consecutive resources (e.g., the first resource of each burst resource) belongs to the set of available resources in the resource (re)selection procedure based on an RSRP measurement value.

In embodiments of the present disclosure, the procedure for a transmitting UE to obtain PSCCH/PSSCH transmission resources for different TBs for consecutive slots may be in the form wherein another resource (re)selection procedure is performed based on the mutually selected resources when performing a resource (re)selection procedure for each TB, or when performing a plurality of resource (re)selection procedures, when determining the selected resources, the final set of selected resources may be allocated to consecutive slots and/or the same set of RB sets.

While embodiments of the present disclosure describe a method for indicating SL burst resources using a single TRIV and two FRIVs, methods for indicating SL burst resources using other combinations of these numbers may be applied as an extension of the ideas of the present disclosure.

While embodiments of the present disclosure describe TRIVs and/or FRIVs indicating up to two resources, the ideas of the present disclosure can be extended to the case of indicating more than two resources.

For example, a UE may only transmit on the first PSCCH/PSSCH transmission resource after the channel sensing result for consecutive PSCCH/PSSCH transmission resources becomes idle.

For example, a UE may only perform a transmission on a PSCCH/PSSCH transmission resource that is located such that the time difference between the previous PSCCH/PSSCH transmissions for the same TB is greater than or less than the HARQ RTT after the channel sensing result for consecutive PSCCH/PSSCH transmission resources becomes idle.

For example, a UE may transmit from the first PSCCH/PSSCH transmission resource after the channel sensing result for consecutive PSCCH/PSSCH transmission resources becomes idle to the end of consecutive transmission resources thereafter.

For example, a UE may perform transmissions from a PSCCH/PSSCH transmission resource that is located such that the time difference between the previous PSCCH/PSSCH transmissions for the same TB after the channel sensing result for consecutive PSCCH/PSSCH transmission resources becomes idle is greater than or less than a HARQ RTT and/or a reference channel sensing interval length and/or the sum of the above, to the end of the consecutive transmission resources thereafter.

For example, when a UE performs a resource (re)selection procedure for an SL transmission, a PSCCH/PSSCH transmission resource may be preferentially determined among the resources where the time difference between PSCCH/PSSCH transmission resources is greater than or equal to a HARQ RTT and/or a reference channel sensing interval length and/or the maximum of the above values and/or the sum of the above values. For example, the PSCCH/PSSCH transmission resources may be determined such that cases where the set of RB sets is the same or partially overlapping among the PSCCH/PSSCH transmission resources are prioritized. For example, when selecting available resources, before or after boosting the RSRP threshold, and/or when the amount of available resources is insufficient (the amount of available resource candidates or the ratio of the candidate resources in the resource selection window is below or equal to a (pre-)configured threshold), resources belonging to different RB sets may be determined as PSCCH/PSSCH transmission resources.

For example, the reference channel sensing interval length may vary depending on the priority class and/or SL priority value for the SL transmission. For example, the reference channel sensing interval length may be (pre-)configured per priority class and/or per SL priority value. For example, the reference channel sensing interval length may be a value derived based on a maximum value and/or a minimum value and/or an average value thereof of the contention window size according to the priority class and/or the SL priority value for the SL transmission. For example, the reference channel sensing interval may be derived in the form where a number of defer durations are concatenated based on a specific contention window size value.

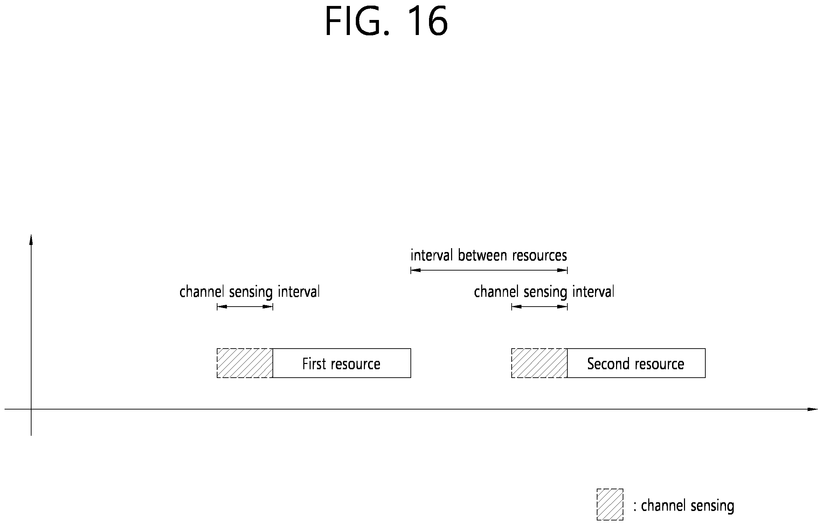

FIG. 16 shows an example of a resource for SL communication in an unlicensed band, according to one embodiment of the present disclosure. The embodiment of FIG. 16 may be combined with various embodiments of the present disclosure.

Referring to FIG. 16, a first resource and a second resource are shown. The first resource and the second resource may be resources in an unlicensed band. For example, for SL communication to be performed based on the first resource and the second resource, the result of the channel sensing related to each resource may be idle.

For example, when the first resource and the second resource are selected, the interval between the resources may be longer than a channel sensing interval. For example, this may be to ensure that a transmission performed based on the earlier of the two resources does not affect the results of channel sensing related to the later of the two resources.

For example, when a UE performs a resource (re)selection procedure for an SL transmission, the time difference between a PSCCH/PSSCH transmission resource and a corresponding HARQ-ACK feedback resource and/or a PSFCH resource may be determined such that a UE expects to receive HARQ-ACK feedback and/or PSFCH from the earliest HARQ-ACK feedback resource and/or PSFCH resource after a location with respect to a PSSCH-to-PSFCH timing value and/or a reference channel sensing interval length and/or a maximum value of the value and/or a sum of the values. For example, when a UE transmits a PSCCH/PSSCH, the HARQ-ACK feedback resource and/or PSFCH resource for the PSCCH/PSSCH may be limited to a subset (including the same) of the set of RB sets corresponding to the PSCCH/PSSCH resource.

For example, when a UE performs a resource (re)selection procedure for an SL transmission, a PSCCH/PSSCH transmission resource may be preferentially determined among resources where the time difference between the PSCCH/PSSCH transmission resources (for retransmission) after the HARQ-ACK feedback resource and/or the PSFCH resource is greater than or equal to the time for detecting the HARQ-ACK feedback or PSFCH and the processing time for preparing the PSCCH/PSSCH and/or the reference channel sensing interval length and/or the maximum value of the above values and/or the sum of the above values.

For example, if after a UE performs a PSCCH/PSSCH transmission, the difference between the time point of the transmission and the time point of the next reserved resource is less than a reference channel sensing interval length, the UE may omit the PSCCH/PSSCH transmission in the next reserved resource.

For example, the operation may be limited to cases where a UE needs to perform type 1 channel access (channel sensing based on random back-off) for the PSCCH/PSSCH transmission. For example, if after a UE performs a PSCCH/PSSCH transmission, the difference between the time point of the transmission and the time point of the next reserved resource is less than a reference channel sensing interval length, the UE may reduce the actual channel sensing interval length to determine whether to transmit PSCCH/PSSCH in the next reserved resource based on the channel sensing result. For example, the actual channel sensing interval may be determined to be between the end time point of the PSCCH/PSSCH transmission performed by the UE and the starting time point of the next reserved resource or within the above.

For example, if after a UE performs a PSCCH/PSSCH transmission, the difference between the time point of the transmission and the time point of the next reserved resource is less than a reference channel sensing interval length, the UE may perform resource reselection for the next reserved resource. For example, if after a UE performs a PSCCH/PSSCH transmission, the difference between the time point of the transmission and the time point of the next reserved resource is less than a reference channel sensing interval length, the UE may perform simplified channel sensing for the transmission on the next reserved resource (e.g., due to COT sharing, etc.) and perform a PSCCH/PSSCH transmission.

For example, after a UE performs a PSCCH/PSSCH transmission, if the difference between the time point of the transmission and a time point of the HARQ-ACK feedback and/or PSFCH resource for it is less than a reference channel sensing interval length, a PSCCH/PSSCH receiving UE may omit the HARQ-ACK feedback and/or PSFCH transmission. For example, the operation may be limited to be performed when a UE needs to perform type 1 channel access (channel sensing based on RANDOM BACK-OFF) for the HARQ-ACK feedback and/or PSFCH transmission.

For example, after a UE performs a PSCCH/PSSCH transmission, if the difference between the time point of the transmission and the time point of the HARQ-ACK feedback and/or PSFCH resource for it is less than a reference channel sensing interval length, a PSCCH/PSSCH receiving UE may reduce the actual channel sensing interval length to determine whether to transmit HARQ-ACK feedback and/or PSFCH based on the result of channel sensing.

When the unit of resource (re)selection in embodiments of the present disclosure is an SL burst of a plurality of consecutive slots, the limitation on the time difference between transmission resources may be applied based on the difference between the starting slots of each SL burst, or may be applied based on the difference between the end time point of the last slot of the previous SL burst and the starting time point of the first slot of the next SL burst.

In embodiments of the present disclosure, a defer duration may be a (pre-)configured value, or it may be in the concatenated form of a T_f=16 usec interval followed by m_p consecutive T_sl=9 usec long sensing slots, as in Type 1 channel access, where m_p may be a predefined value depending on the priority class.

For example, when a UE performs type 1 channel access (channel sensing based on random back-off) for a reserved resource, the parameter N value for the size of the contention window and/or the number of defer durations and/or the reference channel sensing interval length (e.g., the sensing interval length used to determine the distance between PSCCH/PSSCH resources during resource selection) may be indicated via first SCI and/or second SCI indicating the reserved resource.

For example, for a repeated resource, if it is determined to be an excluded resource by a re-evaluation and/or pre-emption operation considering a channel sensing procedure, a UE may omit resource reselection for the repeated resource. For example, this case may be in the form of a reduction in the actual size of the SL burst for the repeated resource. For example, a UE may reselect the entire resource of the SL burst if the repeated resource is determined to be an excluded resource by the re-evaluation and/or pre-emption operation considering the channel sensing procedure.

Embodiments of the disclosure may be applied in any combination of the above, depending on whether the transmission is within or outside the channel occupancy time (COT). Embodiments of the present disclosure may be applied in different combinations of the above depending on the shape of the COT (e.g., whether it is semi-static or time-varying). Embodiments of the present disclosure may be applied in different combinations of the above, depending on the carrier, depending on the presence or absence of guards between RB sets, or depending on regulations.

The proposed method may be applied to the device described below. First, a processor 202 of a receiving UE may configure at least one BWP. Then, the processor 202 of the receiving UE may control a transceiver 206 of the receiving UE to receive a sidelink-related physical channel and/or a sidelink-related reference signal from a transmitting UE on the at least one BWP.

According to the prior art, since there is no defined SL communication operation in an unlicensed band, the selection of a resource to perform SL communication is not possible. According to embodiments of the present disclosure, selection of an SL resource suitable for communication in an unlicensed band is possible, and thus SL communication in an unlicensed band may be possible.

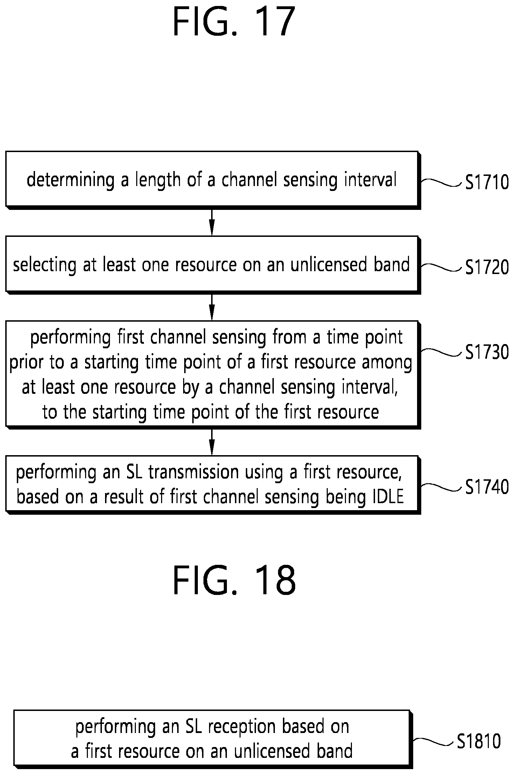

FIG. 17 shows a procedure for a first device to perform wireless communication, according to one embodiment of the present disclosure. The embodiment of FIG. 17 may be combined with various embodiments of the present disclosure.

Referring to FIG. 17, in step S1710, a first device may determine a length of a channel sensing interval. In step S1720, the first device may select at least one resource on an unlicensed band. For example, a time interval between the at least one resource may be longer than the length of the channel sensing interval. In step S1730, the first device may perform first channel sensing from a time point prior to a starting time point of a first resource among the at least one resource by the channel sensing interval, to the starting time point of the first resource. In step S1740, the first device may perform a sidelink (SL) transmission using the first resource, based on a result of the first channel sensing being IDLE.

For example, the at least one resource may be selected based on sensing.

For example, the sensing may include: decoding sidelink control information (SCI) received in a target resource of sensing; and excluding a resource in which a collision is expected from a candidate resource, based on the decoded SCI.

For example, the first channel sensing may include measuring energy within the channel sensing interval.

For example, the first channel sensing may include a type 1 listen before talk (LBT) operation.

For example, the first channel sensing may include a type 2 LBT operation.

For example, the at least one resource may be a burst resource.

For example, wherein the at least one resource may be consecutive in terms of slots.

For example, additionally, the first device may: reselect a resource after a second resource among the least one resource to at least one reselection resource.

For example, all resources after the second resource may be reselected, and the at least one reselection resource may be consecutive in term of slots.

For example, additionally, the first device may: perform second channel sensing from a time point prior to a starting time point of the second resource by the channel sensing interval, to the starting time point of the second resource. For example, the reselection may be performed based on a result of the second channel sensing being BUSY.

For example, the length of the channel sensing interval may be determined based on a priority class related to SL data transmitted through the SL transmission.

For example, the length of the channel sensing interval may be determined based on a priority value related to SL data transmitted through the SL transmission.

The embodiments described above may be applied to various devices described below. First, a processor 102 of a first device 100 may determine a length of a channel sensing interval. And, the processor 102 of the first device 100 may select at least one resource on an unlicensed band. For example, a time interval between the at least one resource may be longer than the length of the channel sensing interval. And, the processor 102 of the first device 100 may perform first channel sensing from a time point prior to a starting time point of a first resource among the at least one resource by the channel sensing interval, to the starting time point of the first resource. And, the processor 102 of the first device 100 may control a transceiver 106 to perform a sidelink (SL) transmission using the first resource, based on a result of the first channel sensing being IDLE.

According to an embodiment of the present disclosure, a first device performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: determining a length of a channel sensing interval; selecting at least one resource on an unlicensed band, wherein a time interval between the at least one resource may be longer than the length of the channel sensing interval; performing first channel sensing from a time point prior to a starting time point of a first resource among the at least one resource by the channel sensing interval, to the starting time point of the first resource; and performing a sidelink (SL) transmission using the first resource, based on a result of the first channel sensing being IDLE.

For example, the at least one resource may be selected based on sensing.

For example, the sensing may include: decoding sidelink control information (SCI) received in a target resource of sensing; and excluding a resource in which a collision is expected from a candidate resource, based on the decoded SCI.

For example, the first channel sensing may include measuring energy within the channel sensing interval.

For example, the first channel sensing may include a type 1 listen before talk (LBT) operation.

For example, the first channel sensing may include a type 2 LBT operation.

For example, the at least one resource may be a burst resource.

For example, the at least one resource may be consecutive in terms of slots.

For example, additionally, the operations may further comprise: reselecting a resource after a second resource among the least one resource to at least one reselection resource.

For example, all resources after the second resource may be reselected, and the at least one reselection resource may be consecutive in term of slots.

For example, additionally, the operations may further comprise: performing second channel sensing from a time point prior to a starting time point of the second resource by the channel sensing interval, to the starting time point of the second resource. For example, the reselection may be performed based on a result of the second channel sensing being BUSY.

For example, the length of the channel sensing interval may be determined based on a priority class related to SL data transmitted through the SL transmission.

For example, the length of the channel sensing interval may be determined based on a priority value related to SL data transmitted through the SL transmission.

According to an embodiment of the present disclosure, a device adapted to control a first user equipment (UE) may be proposed. For example, the device may comprise: at least one processor; and at least one memory operably connected to the at least one processor and storing instructions that, based on being executed by the at least one processor, cause the first UE to perform operations. For example, the operations may comprise: determining a length of a channel sensing interval; selecting at least one resource on an unlicensed band, wherein a time interval between the at least one resource may be longer than the length of the channel sensing interval; performing first channel sensing from a time point prior to a starting time point of a first resource among the at least one resource by the channel sensing interval, to the starting time point of the first resource; and performing a sidelink (SL) transmission using the first resource, based on a result of the first channel sensing being IDLE.

According to an embodiment of the present disclosure, a non-transitory computer-readable storage medium storing instructions may be proposed. For example, the instructions, based on being executed, may cause a first device to: determine a length of a channel sensing interval; select at least one resource on an unlicensed band, wherein a time interval between the at least one resource may be longer than the length of the channel sensing interval; perform first channel sensing from a time point prior to a starting time point of a first resource among the at least one resource by the channel sensing interval, to the starting time point of the first resource; and perform a sidelink (SL) transmission using the first resource, based on a result of the first channel sensing being IDLE.

FIG. 18 shows a procedure for a second device to perform wireless communication, according to one embodiment of the present disclosure. The embodiment of FIG. 18 may be combined with various embodiments of the present disclosure.

Referring to FIG. 18, in step S1810, a second device may perform a sidelink (SL) reception based on a first resource on an unlicensed band. For example, SL data received through the SL reception may be transmitted based on a result of channel sensing being IDLE, the channel sensing may be performed from a time point prior to a starting time point of the first resource among at least one resource on the unlicensed band by a channel sensing interval, to the starting time point of the first resource, and a time interval between the at least one resource may be longer than a length of the channel sensing interval.

For example, the at least one resource may be consecutive in terms of slots.

The embodiments described above may be applied to various devices described below. First, a processor 202 of a second device 200 may control a transceiver 206 to perform a sidelink (SL) reception based on a first resource on an unlicensed band. For example, SL data received through the SL reception may be transmitted based on a result of channel sensing being IDLE, the channel sensing may be performed from a time point prior to a starting time point of the first resource among at least one resource on the unlicensed band by a channel sensing interval, to the starting time point of the first resource, and a time interval between the at least one resource may be longer than a length of the channel sensing interval.

According to an embodiment of the present disclosure, a second device performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: performing a sidelink (SL) reception based on a first resource on an unlicensed band, wherein SL data received through the SL reception may be transmitted based on a result of channel sensing being IDLE, wherein the channel sensing may be performed from a time point prior to a starting time point of the first resource among at least one resource on the unlicensed band by a channel sensing interval, to the starting time point of the first resource, and wherein a time interval between the at least one resource may be longer than a length of the channel sensing interval.

For example, the at least one resource may be consecutive in terms of slots.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

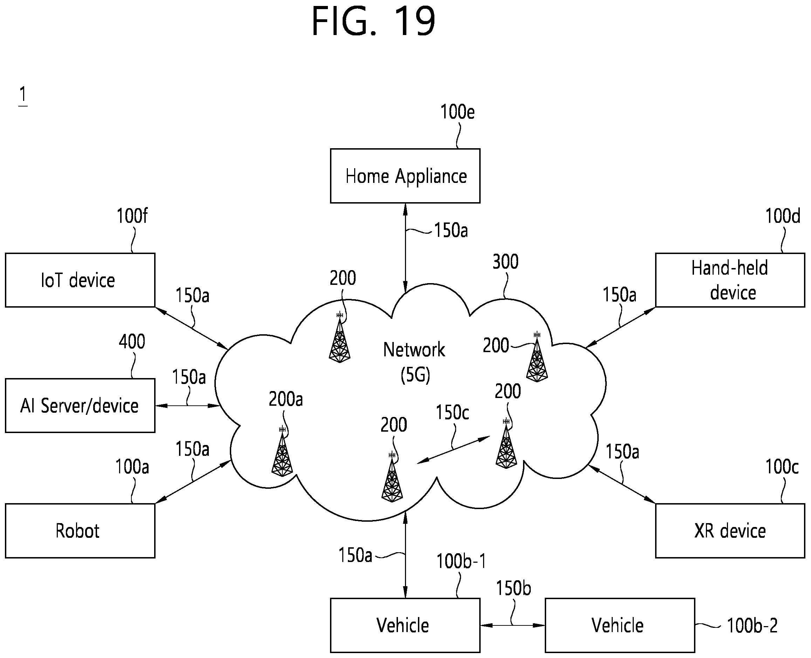

FIG. 19 shows a communication system 1, based on an embodiment of the present disclosure. The embodiment of FIG. 19 may be combined with various embodiments of the present disclosure.

Referring to FIG. 19, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

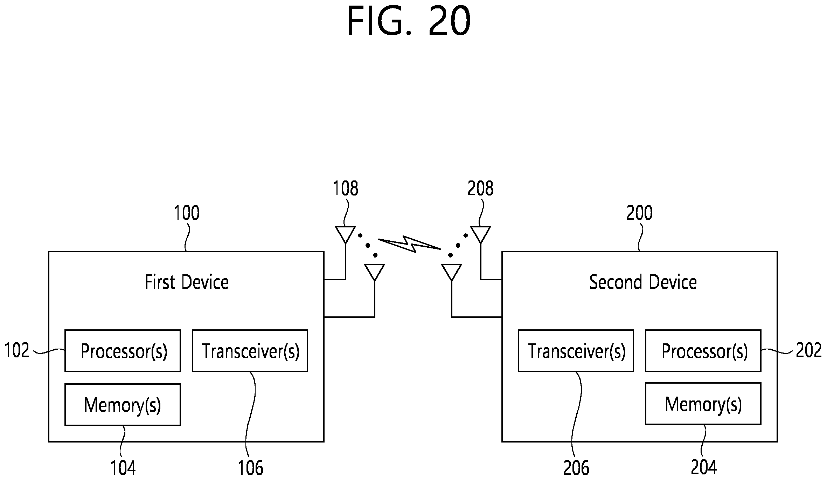

FIG. 20 shows wireless devices, based on an embodiment of the present disclosure. The embodiment of FIG. 20 may be combined with various embodiments of the present disclosure.

Referring to FIG. 20, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 19.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

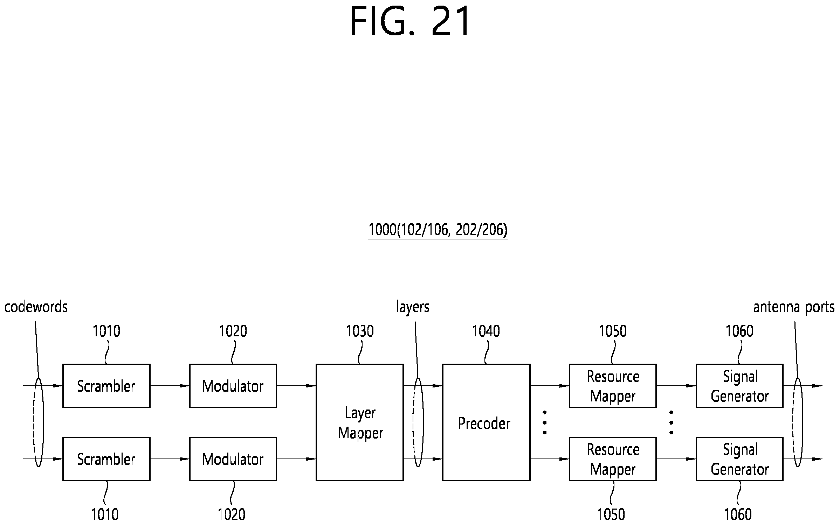

FIG. 21 shows a signal process circuit for a transmission signal, based on an embodiment of the present disclosure. The embodiment of FIG. 21 may be combined with various embodiments of the present disclosure.

Referring to FIG. 21, a signal processing circuit 1000 may include scramblers 1010, modulators 1020, a layer mapper 1030, a precoder 1040, resource mappers 1050, and signal generators 1060. An operation/function of FIG. 21 may be performed, without being limited to, the processors 102 and 202 and/or the transceivers 106 and 206 of FIG. 20. Hardware elements of FIG. 21 may be implemented by the processors 102 and 202 and/or the transceivers 106 and 206 of FIG. 20. For example, blocks 1010 to 1060 may be implemented by the processors 102 and 202 of FIG. 20. Alternatively, the blocks 1010 to 1050 may be implemented by the processors 102 and 202 of FIG. 20 and the block 1060 may be implemented by the transceivers 106 and 206 of FIG. 20.

Codewords may be converted into radio signals via the signal processing circuit 1000 of FIG. 21. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 21. For example, the wireless devices (e.g., 100 and 200 of FIG. 20) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

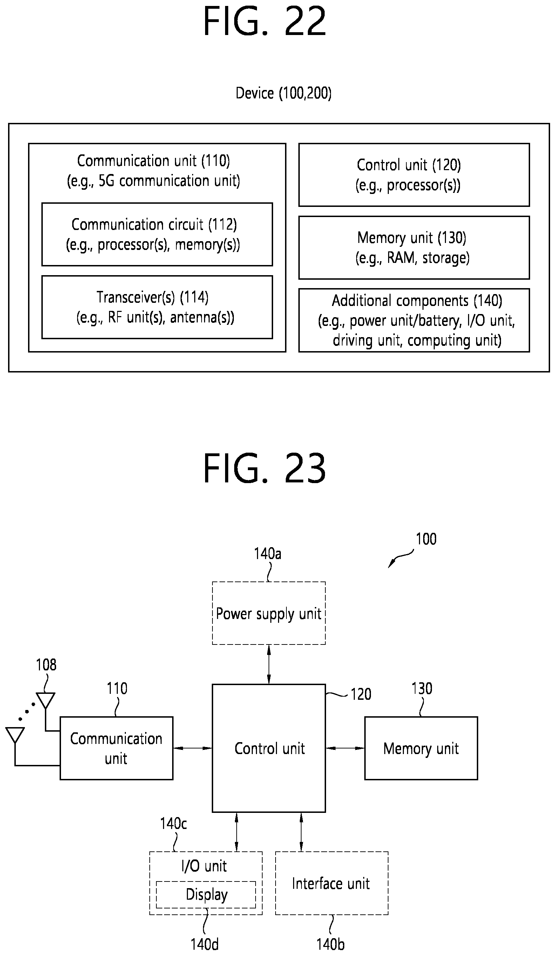

FIG. 22 shows another example of a wireless device, based on an embodiment of the present disclosure. The wireless device may be implemented in various forms according to a use-case/service (refer to FIG. 19). The embodiment of FIG. 22 may be combined with various embodiments of the present disclosure.

Referring to FIG. 22, wireless devices 100 and 200 may correspond to the wireless devices 100 and 200 of FIG. 20 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 20. For example, the transceiver(s) 114 may include the one or more transceivers 106 and 206 and/or the one or more antennas 108 and 208 of FIG. 20. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 19), the vehicles (100b-1 and 100b-2 of FIG. 19), the XR device (100c of FIG. 19), the hand-held device (100d of FIG. 19), the home appliance (100e of FIG. 19), the IoT device (100f of FIG. 19), a digital broadcast terminal, a hologram device, a public safety device, an MTC device, a medicine device, a fintech device (or a finance device), a security device, a climate/environment device, the AI server/device (400 of FIG. 19), the BSs (200 of FIG. 19), a network node, etc. The wireless device may be used in a mobile or fixed place according to a use-example/service.

In FIG. 22, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 22 will be described in detail with reference to the drawings.

FIG. 23 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 23 may be combined with various embodiments of the present disclosure.

Referring to FIG. 23, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 22, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

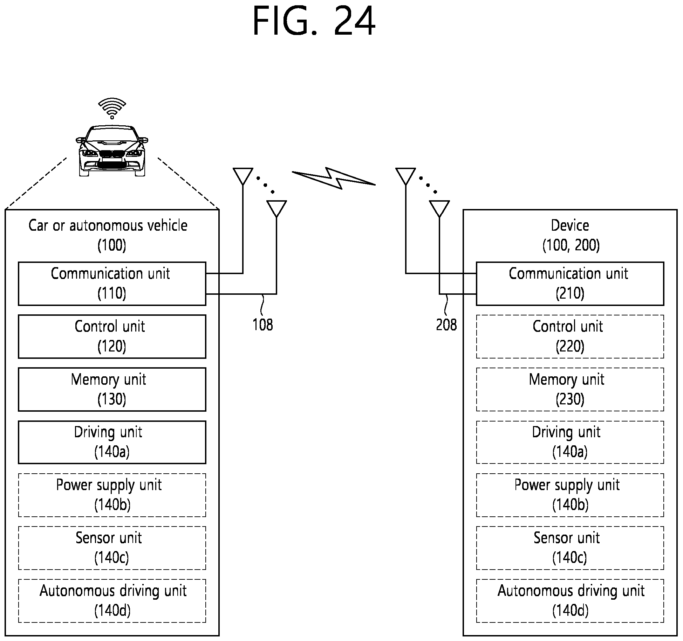

FIG. 24 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 24 may be combined with various embodiments of the present disclosure.

Referring to FIG. 24, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 22, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:
determining a length of a channel sensing interval;
selecting at least one resource on an unlicensed band,
wherein a time interval between the at least one resource is longer than the length of the channel sensing interval;
performing first channel sensing from a time point prior to a starting time point of a first resource among the at least one resource by the channel sensing interval, to the starting time point of the first resource; and
performing a sidelink (SL) transmission using the first resource, based on a result of the first channel sensing being IDLE.

2. The method of claim 1, wherein the at least one resource is selected based on sensing.

3. The method of claim 2, wherein the sensing includes:
decoding sidelink control information (SCI) received in a target resource of sensing; and
excluding a resource in which a collision is expected from a candidate resource, based on the decoded SCI.

4. The method of claim 1, wherein the first channel sensing includes measuring energy within the channel sensing interval.

5. The method of claim 1, wherein the first channel sensing includes a type 1 listen before talk (LBT) operation.

6. The method of claim 1, wherein the first channel sensing includes a type 2 LBT operation.

7. The method of claim 1, wherein the at least one resource is a burst resource.

8. The method of claim 7, wherein the at least one resource is consecutive in terms of slots.

9. The method of claim 7, further comprising:
reselecting a resource after a second resource among the least one resource to at least one reselection resource.

10. The method of claim 9, wherein all resources after the second resource are reselected, and
wherein the at least one reselection resource is consecutive in term of slots.

11. The method of claim 9, further comprising:
performing second channel sensing from a time point prior to a starting time point of the second resource by the channel sensing interval, to the starting time point of the second resource,
wherein the reselection is performed based on a result of the second channel sensing being BUSY.

12. The method of claim 1, wherein the length of the channel sensing interval is determined based on a priority class related to SL data transmitted through the SL transmission.

13. The method of claim 1, wherein the length of the channel sensing interval is determined based on a priority value related to SL data transmitted through the SL transmission.

14. A first device performing wireless communication, the first device comprising:
at least one transceiver;
at least one processor; and
at least one memory operably connected to the at least one processor and storing instructions that, based on being executed by the at least one processor, cause the first device to perform operations,
wherein the operations comprise:
determining a length of a channel sensing interval;
selecting at least one resource on an unlicensed band,
wherein a time interval between the at least one resource is longer than the length of the channel sensing interval;
performing first channel sensing from a time point prior to a starting time point of a first resource among the at least one resource by the channel sensing interval, to the starting time point of the first resource; and
performing a sidelink (SL) transmission using the first resource, based on a result of the first channel sensing being IDLE.

15. A device adapted to control a first user equipment (UE), the device comprising:
at least one processor; and
at least one memory operably connected to the at least one processor and storing instructions that, based on being executed by the at least one processor, cause the first UE to perform operations,
wherein the operations comprise:
determining a length of a channel sensing interval;
selecting at least one resource on an unlicensed band,
wherein a time interval between the at least one resource is longer than the length of the channel sensing interval;
performing first channel sensing from a time point prior to a starting time point of a first resource among the at least one resource by the channel sensing interval, to the starting time point of the first resource; and
performing a sidelink (SL) transmission using the first resource, based on a result of the first channel sensing being IDLE.

16. A non-transitory computer-readable storage medium storing instructions that, based on being executed, cause a first device to:
determine a length of a channel sensing interval;
select at least one resource on an unlicensed band,
wherein a time interval between the at least one resource is longer than the length of the channel sensing interval;
perform first channel sensing from a time point prior to a starting time point of a first resource among the at least one resource by the channel sensing interval, to the starting time point of the first resource; and
perform a sidelink (SL) transmission using the first resource, based on a result of the first channel sensing being IDLE.

17. A method for performing, by a second device, wireless communication, the method comprising:
performing a sidelink (SL) reception based on a first resource on an unlicensed band,
wherein SL data received through the SL reception is transmitted based on a result of channel sensing being IDLE,
wherein the channel sensing is performed from a time point prior to a starting time point of the first resource among at least one resource on the unlicensed band by a channel sensing interval, to the starting time point of the first resource, and
wherein a time interval between the at least one resource is longer than a length of the channel sensing interval.

18. The method of claim 17, wherein the at least one resource is consecutive in terms of slots.

19. A second device performing wireless communication, the second device comprising:
at least one transceiver;
at least one processor; and
at least one memory operably connected to the at least one processor and storing instructions that, based on being executed by the at least one processor, cause the second device to perform operations,
wherein the operations comprise:
performing a sidelink (SL) reception based on a first resource on an unlicensed band,
wherein SL data received through the SL reception is transmitted based on a result of channel sensing being IDLE,
wherein the channel sensing is performed from a time point prior to a starting time point of the first resource among at least one resource on the unlicensed band by a channel sensing interval, to the starting time point of the first resource, and
wherein a time interval between the at least one resource is longer than a length of the channel sensing interval.

20. The second device of claim 19, wherein the at least one resource is consecutive in terms of slots.
